# EUROPEAN PATENT APPLICATION

(11) **EP 1 582 255 A1**
(43) Date of publication of application: **05.10.2005**
(21) Application number: 05251930.3
(22) Date of filing: 29.03.2005
(51) Int. Cl.: B01J 19/00

(54) **Probe array producing method**

(30) Priority: 29.03.2004 JP 2004097232
(71) Applicant: Lintec Corporation, Tokyo 173-0001 (JP); RIKEN, Saitama 351-0198 (JP)
(72) Inventor: Yamamoto, Yuko, Itabashi-ku, Tokyo 173-0016 (JP); Okabe, Hideaki, Kanagawa 253-0011 (JP); Tashiro, Hideo, c/o Riken, Wako-shi, Saitama 351-0198 (JP); Kondoh, Yasumitsu, c/o Riken, Wako-shi, Saitama 351-0198 (JP)
(74) Representative: Nicholls, Michael John

(57) **Abstract**

In order to provide a method for producing easily a probe array with probes arranged in the hollow portion of a tubular member, the present invention provides a method for producing a probe array comprising a step of forming a flexible sheet member 11 having a probe-immobilizing surface 110 into a tubular member in such a way that the probe-immobilizing surface 110 constitutes the inner face of the tubular member.

## Description

### BACKGROUND OF THE INVENTION

### Field of the invention

The present invention relates to a probe array producing method.

### Description of the related art

In recent years probe arrays such as DNA chips, protein chips, etc., have been developed wherein probes (for instance, a biological substance such as DNA, proteins, etc.) that can react with a target substance are immobilized onto a plate-like substrate of glass, silicon, etc., in order to detect a target substance, as disclosed for instance in Japanese Unexamined Patent Application Publication No. H11-108928.

In probe array detection, a liquid sample containing the target substance is added onto a plate-like substrate and is then covered by a cover-glass, etc., to avoid drying; after reaction of the probe with the target substance, the probe array is washed and substances other than the target substance are removed, after which is carried out the detection of a labeling substance (such as a fluorochrome, an enzyme, etc.), bonded beforehand to the target substance. Herein, a number of manual operations must be carried out, such as taking up a minute liquid sample with a micropipette and adding the sample uniformly onto a plate-like substrate, covering the sample with a cover glass, removing the cover glass after reaction, and washing uniformly the plate-like substrate, etc. These are all extremely delicate operations in which the manipulation of the operator can result in greatly diverging results. Thus, result reproducibility becomes difficult to achieve. Devices have also been developed for automating detection, but these are not easily available owing to their substantial expense.

In light of the above, Japanese Unexamined Patent Application Publication No. 11-75812 discloses a probe array wherein a plurality of probe types are immobilized as stripes on the inner wall of a transparent cylindrical capillary. In such a probe array, the easy operation of flowing a liquid samples, a wash solution, etc., into and out of the hollow portion of the cylindrical capillary allows detecting target substances with a good reproducibility.

### SUMMARY OF THE INVENTION

As probe array producing methods, (1) a method wherein a probe-containing liquid taken up in a spotting pin is spotted onto specific positions of a substrate (U.S. Patent No. 5,807,522), and (2) a method wherein oligonucleotides are synthesized directly on a substrate by photolithographic techniques used in semiconductor manufacturing (U.S. Patent No. 5,424,186) are known. For fixing a plurality of probe types onto the inner wall of a cylindrical capillary, since it is difficult to use the method (1), it is necessary to use the method (2), which is also used in Japanese Unexamined Patent Application Publication No. 11-75812.

However, the implementation of the method (2) requires complex reaction steps using special reagents.

Thus, an object of the present invention is to provide a probe array producing method that allows producing easily a probe array with probes arranged in the hollow portion of a tubular member.

In order to solve the above problems, the present invention provides firstly a method for producing a probe array comprising a tubular member and probes arranged in the hollow portion of the tubular member, the method comprising a step of forming a flexible sheet member having a probe-immobilizing surface into a tubular member in such a way that the probe-immobilizing surface constitutes the inner face of the tubular member.

Secondly, the present invention provides a method for producing a probe array comprising a tubular member and probes arranged in the hollow portion of the tubular member, the method comprising a step of attaching a flexible sheet member having a probe-immobilizing surface onto the inner face of the tubular member in such a way that the probe-immobilizing surface is exposed in the hollow portion of the tubular member.

The present invention allows producing easily a probe array with probes arranged in the hollow portion of a tubular member.

### BRIEF DESCRIPTION OF THE DRAWINGS

FIG. 1 is a perspective view of a flexible sheet member having a probe immobilizing surface;
FIG. 2 is a perspective view of a flexible sheet member having a probe immobilizing surface;
FIG. 3 is a perspective view of a probe array produced using the producing method according to a first embodiment of the present invention;
FIG. 4 is a perspective view of a probe array produced using the producing method according to a second embodiment of the present invention; and
FIG. 5 is a perspective view of a modification of the producing method according to the first embodiment of the present invention.

### DESCRIPTION OF THE PREFERRED EMBODIMENTS

The present invention is described in detail below, with reference to the drawings.

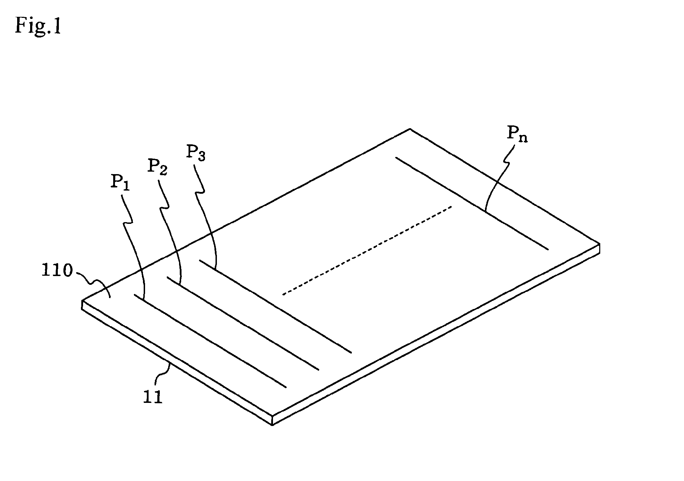

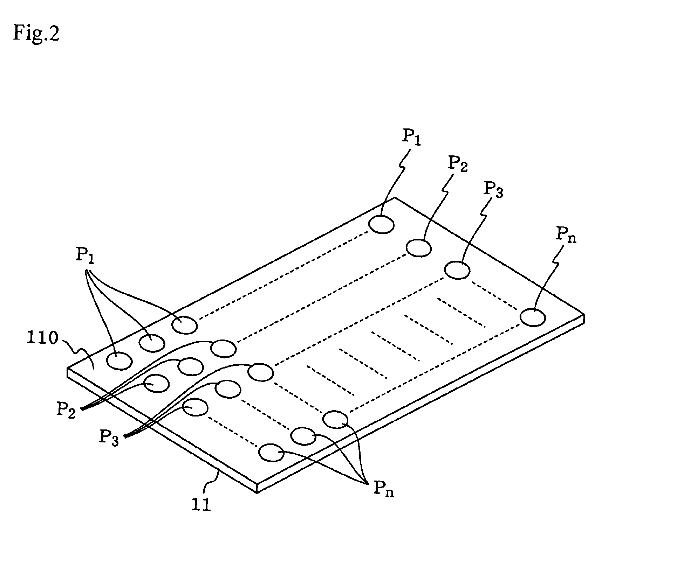

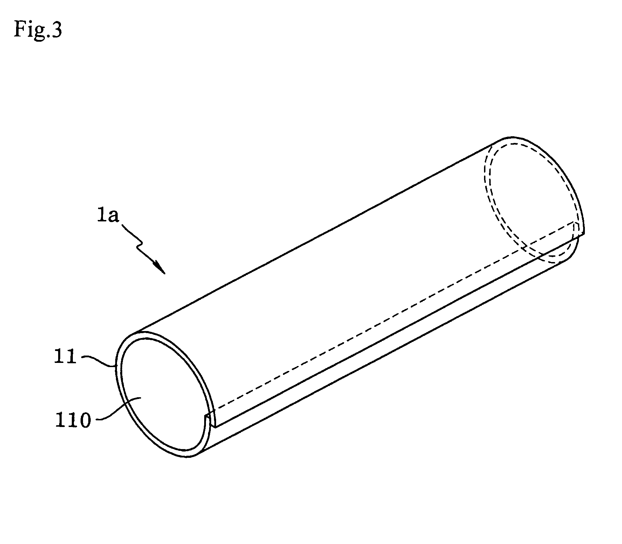

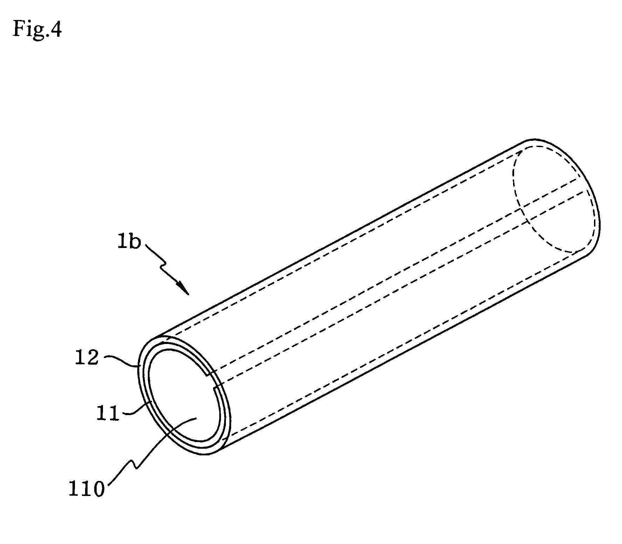

FIG. 1 and FIG. 2 are perspective views of a flexible sheet member having a probe immobilizing surface; FIG. 3 is a perspective view of a probe array produced using the producing method according to a first embodiment of the present invention; and FIG. 4 is a perspective view of a probe array produced using the producing method according to a second embodiment of the present invention.

### [First embodiment]

The producing method according to the first embodiment is a method for producing a probe array 1a (see FIG. 3), which comprises the step of forming a flexible sheet member 11 (see FIG. 1 and FIG. 2) having a probe-immobilizing surface 110 into a cylindrical member in such a way that the probe-immobilizing surface 110 constitutes the inner face of the cylindrical member.

The material of the flexible sheet member 11 is not particularly restricted provided it is flexible and it is insoluble in a liquid sample, a washing liquid, etc., and may be for instance plastics including thermoplastic resins such as polyethylene resins, e.g. polyethylene, polyethylene copolymer (for instance, ethylene-ethyl acrylate copolymer, ethylene-vinyl acetate copolymer), etc.; polypropylene; polystyrene resins, e.g. polystyrene, polystyrene copolymer (for instance, acrylonitrile-styrene copolymer, acrylonitrile-styrene-butadiene copolymer), etc.; vinyl chloride resins; vinylidene chloride resins; fluoroplastics, e.g. polytetrafluoroethylene, etc.; acrylic resins, e.g. polymethyl methacrylate, polyacrylonitrile, etc.; polyesters, e.g. polyethylene terephthalate, polyethylene naphthalate, polybutylene terephthalate; polycarbonate, etc.

The flexible sheet member 11 may be porous or nonporous. In case that the flexible sheet member 11 is porous, the flexible sheet member 11 has a greater surface area, which allows immobilizing more probes on the surface thereof.

The material of the flexible sheet member 11 is preferably transparent or translucent (i.e. has optical transparency). Thus, a labeling substance bonded to a target substance can be detected at the outer side of the probe array 1a, which allows detecting the target substance without cutting open the probe array 1a.

The flexible sheet member 11 may be for instance a sheet made of above-listed thermoplastic resins or a laminate sheet thereof, and may have a thickness of 10 to 200 µm, with arbitrary modifications allowed provided flexibility is maintained.

As shown in FIG. 1 and FIG. 2, probe groups P₁ - Pₙ (wherein n is an integer equal to or greater than 1, preferably an integer equal to or greater than 2) are immobilized onto the probe-immobilizing surface 110 of the flexible sheet member 11 as stripes (see FIG. 1) or as spots (see FIG. 2), in such a way that the kind of probe contained in each probe group may be identified based on the position in which each probe group is immobilized. The probe groups may be immobilized in an arbitrary arrangement provided there is a correspondence between probe kind and probe position. The arrangement, spot size, etc. of the probe groups may also vary arbitrarily.

One probe group among the probe groups P₁ - Pₙ contains a plurality of probes of the same kind. The probes contained in each probe group are biological substances such as nucleic acids, proteins, antigens, antibodies, enzymes, sugar chains, etc. The kinds of probes contained in different probe groups may be identical or different; herein the entire set of probe groups contains preferably a plurality of probe types. The plurality of probe types immobilized on the probe-immobilizing surface 110 allows detecting simultaneously and in parallel a plurality of target substance types.

The probe groups P₁ - Pₙ can attach to the surface of the flexible sheet member 11 by electrostatic binding or covalent binding, protein-protein interactions, protein-low molecular compound interactions, etc. In order to promote this immobilizing effect, the surface of the flexible sheet member 11 or the probes may be subjected to an appropriate chemical modification using conventional techniques.

In electrostatic binding, the surface of the flexible sheet member 11 is coated for instance with a polycationic substance. A "cationic substance" refers herein to a substance having cationic groups in its molecule. The cationic substance can form a conjugate with nucleic acid through electrostatic interaction. Cationic groups include for instance amino group; monoalkylamino groups such as methylamino group, ethylamino group, etc.; dialkylamino groups such as dimethylamino group, diethylamino group, etc.; imino group; guanidino group, etc. Cationic substances include for instance macromolecules having cationic groups; homopolymers or copolymers of basic amino acids such as polylysine, polyarginine, copolymers of lysine and arginine, etc., and derivatives thereof; polycationic polymers such as polyethyleneimine, etc.

In covalent binding, covalent bonds are formed using the functional groups present in the surface of the flexible sheet member 11 and in the probes. Concrete examples of functional groups capable of forming covalent bonds include for instance carboxyl groups, amino groups, hydroxyl groups, etc. If there are carboxyl groups present in the surface of the flexible sheet member 11, these carboxyl groups may be activated with a carbodiimide such as 1-ethyl-3-(3-dimethylaminopropyl)-3-ethylcarbodiimide hydrochloride (EDC), etc., in order to react subsequently with the amino groups of the probes, thus forming amide bonds between the flexible sheet member 11 and the probes. If there are amino groups present in the surface of the flexible sheet member 11, these amino groups are transformed into carboxyl groups using a cyclic acid anhydride such as succinic acid anhydride, etc., in order to react subsequently with the amino groups of the probes, thus forming amide bonds between the flexible sheet member 11 and the probes.

Alternatively, the probes may be immobilized onto the flexible sheet member 11 by way of specific interactions such as streptavidin or avidin/biotin, maltose-binding protein/maltose, polyhistidine peptides/metallic ions such as nickel, cobalt, etc., glutathione-S-trasferase/glutathione, calmodulin/calmodulin-binding peptide, ATP binding proteins/ATP, nucleic acid/complementary nucleic acid, receptor protein/ligand, enzyme/substrate, antibody/antigen, IgG/protein A, etc.

The flexible sheet member 11 may be formed into a cylindrical member by using for instance adhesives.

For instance, pressure-sensitive adhesives such as acrylic-based, polyester-based, urethane-based, rubber-based or silicone-based pressure-sensitive adhesives are used as adhesives. Acrylic-based pressure-sensitive adhesives include for instance copolymers of at least one kind of (meth)acrylate esters such as n-butyl (meth)acrylate, hexyl (meth)acrylate, 2-diethyl butyl (meth)acrylate, isooctyl (meth)acrylate, 2-methoxyethyl (meth)acrylate, 2-ehtyl hexyl (meth)acrylate, decyl (meth)acrylate, dodecyl (meth)acrylate, tridecyl (meth)acrylate, etc., and functional monomers copolymerizable with these (meth)acrylate esters, such as (meth)acrylic acid, itaconic acid, maleic acid, maleic anhydride, hydroxyethyl acrylate, hydroxypropyl acrylate, acrylamide, dimethylacrylamide, methyl aminoethyl methacrylate, methoxyethyl (meth)acrylate, etc. Rubber-based pressure-sensitive adhesives include for instance a compound having as its major constituent a synthetic or natural rubber such as styrene-isoprene-styrene block copolymer rubbers, styrene-butadiene rubbers, polybutene rubbers, butyl rubbers, etc. Vinyl ether -based pressure-sensitive adhesives include for instance ethyl vinyl ether, propyl vinyl ether, butyl vinyl ether, 2-ethylhexyl vinyl ether, etc. Silicone-based pressure-sensitive adhesives include for instance a mixture and/or a polymer of dimethylsiloxane rubber and dimethylsiloxane resin, etc. The formulation of pressure-sensitive adhesives may be a solvent-based adhesive or an emulsion-based adhesive. Other adhesives that may be used include for instance epoxy-based, urethane-based, cyanoacrylate-based adhesives, etc.

If the flexible sheet member 11 is made of a heat-sealable material (e.g. a thermoplastic resin), it may be formed into a cylindrical member by a suitable treatment under the conditions of heating, pressure and time even if by using no adhesives.

The probe array 1a is a probe array produced by forming the flexible sheet member 11 into a cylindrical member. The probe groups P₁ - Pₙ are arranged in the hollow portion of the probe array 1a.

The length of the probe array 1a is for instance 1 to 30 cm and its inner diameter 1 mm to 1 cm, with arbitrary modifications allowed.

The present embodiment may admit for instance the following modifications. The flexible sheet member 11 may be formed into a tubular member other than a cylindrical member (for instance, a hollow prismatic member) provided the probe-immobilizing surface 110 constitutes the inner face of the tubular member.

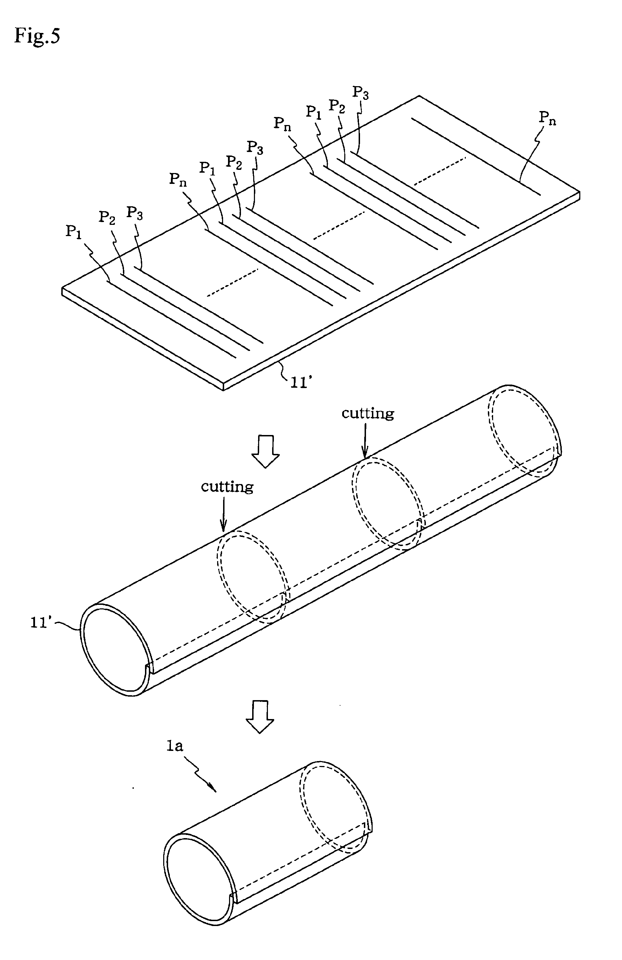

Instead of the flexible sheet member 11, a flexible sheet member 11' (see FIG. 5) with probe groups P₁ - Pₙ immobilized sequentially thereon may also be used. In this case, once the flexible sheet member 11' is formed into a cylindrical member, the probe array 1a can be produced by cutting the flexible sheet member 11' so as to encompass the probe groups P₁ - Pₙ as shown in FIG. 5.

Detection of target substances using the probe array 1a may be carried out as follows:
Step 1: A liquid sample containing the target substance bonded to a labeling substance is flowed into the hollow portion of the probe array 1a so as to bring into contact the target substance with the probe groups P₁ - Pₙ.
   The type of target substance is not particularly restricted and may include for instance biological substances such as nucleic acids, proteins, antigens, antibodies, enzymes, sugar chains, etc. Combinations of probe and target substance include for instance nucleic acids/complementary nucleic acids, receptor proteins/ligands, enzymes/substrates, antibodies/antigens, etc. Nucleic acids herein include DNA, RNA, as well as analogues and derivatives thereof (for instance peptide nucleic acids (PNA), phosphorothioate DNA, etc.)
   Labeling substance include for instance fluorochromes such as fluorescein, rhodamine, phycoerythrin, etc.; enzymes such as alkaline phosphatase, horseradish peroxidase, etc.; chemoluminiscent substances such as luminol, lucigenin, acridinium esters, etc.; bioluminescent substances such as luciferase, luciferin, etc. The solvent for the liquid samples can be selected in accordance with the kind of target substance, and may be for instance water, a buffer solution, or an organic solvent. The liquid samples can be flowed into the hollow of the probe array 1a by capillarity, using a syringe, etc.
Step 2: After the liquid sample is flowed out of the hollow portion of the probe array 1a, a wash solution is flowed into and out of the probe array 1a to wash the probe array 1a. This allows removing the substances other than the target substances that have reacted with the probe groups P₁ - Pₙ.
Step 3: Detection of the labeling substance bonded to the target substance is performed.

For detecting the target substance with a fluorescent labeling substance, the probe-immobilizing surface 110 is exposed to an excitation light, and the fluorescence emitted by the probe-immobilizing surface 110 is detected using a fluorescence detector. The exposure of the probe-immobilizing surface 110 to an excitation light and the detection of the fluorescence emitted by the probe-immobilizing surface 110 can be carried out after cutting open the probe array 1a. If the probe array 1a is transparent or translucent, and the fluorescence detection wavelength does not generate fluorescence, detection can be carried out without cutting open the probe array 1a.

When the labeling substance is an enzyme, the target substance can be detected by an enzymatic color reaction. Color detection after the enzymatic color reaction can be carried out once the probe array 1a is cut open. If the probe array 1a is transparent or translucent (i.e. has optical transparency), detection can be carried out without cutting open the probe array 1a.

### [Second embodiment]

The producing method according to the second embodiment is a method for producing a probe array 1b (see FIG. 4), which comprises the step of attaching a flexible sheet member 11 (see FIG. 1 and FIG. 2) having a probe-immobilizing surface 110 onto the inner face of a cylindrical member 12 in such a way that the probe-immobilizing surface 110 is exposed in the hollow portion of the cylindrical member 12.

The flexible sheet member 11 in the present embodiment is identical to that of the first embodiment.

The material of the cylindrical member 12 is not particularly restricted provided it is insoluble in a liquid sample, a wash solution, etc., and may be for instance plastics such as the aforementioned thermoplastic resins, metals such as iron, copper, aluminum, etc.; glass; ceramics, etc., as well as composites of the above.

The length of the cylindrical member 12 may be for instance 1 to 30 cm, and its inner diameter for instance 1 mm to 1 cm, with arbitrary modifications allowed.

The flexible sheet member 11 can be attached onto the inner face of the cylindrical member 12 by using for instance adhesives, but it may also be attached onto the inner face of the cylindrical member 12 by using its own elasticity even if by using no adhesives.

The probe array 1b is a probe array produced by attaching the flexible sheet member 11 deformed into a C shape, onto the inner face of the cylindrical member 12. The probe groups P₁ - Pₙ are arranged in the hollow portion of the probe array 1b.

The present embodiment admits the following modifications.

Instead of the cylindrical member 12, a tubular member other than a cylindrical member (for instance, a hollow prismatic member) may be used.

The flexible sheet member 11 deformed into a cylindrical shape may also be attached onto the inner face of the cylindrical member 12.

The target substance detection used in the probe array 1b may be identical to that used in the probe array 1a. The labeling substance bonded to the target substance can be detected after removing the flexible sheet member 11 from the cylindrical member 12. Also, if the flexible sheet member 11 and the cylindrical member 12 are transparent or translucent (i.e. have optical transparency), the labeling substance bonded to the target substance can be detected without removing the flexible sheet member 11 from the cylindrical member 12.

The present invention is explained in detail below by way of examples.

### (1) Immobilizing the probe DNA onto the plastic film

A 50 µm thick polyethylene terephthalate (PET) film was cut to a size of 3 cm x 1 cm, was dipped in a poly-L-lysine solution (concentration: 0.01%, solvent: 0.1 x PBS), and was shaken for 1 hour. Next, the PET film was thoroughly washed 4 times with ultrapure water to wash off the excess poly-L-lysine. The poly-L-lysine was then adhered to the PET film by drying for 4 hours at 60°C in a vacuum oven.

10 µL each of probe DNA for positive control and probe DNA for negative control (concentration: 100 pmol/µL, solvent: ultrapure water) were spotted onto the PET film coated with poly-L-lysine. The spots were distributed in 2 rows with a separation of 1 cm between spots. As probe DNA for positive control was used a 200 to 500mer poly (dA), and as probe DNA for negative control was used a 200 to 500mer poly (dT). Next, the spotting solution was dried and was exposed to 600 mJ ultraviolet radiation in a UV crosslinker. For blocking then the surface of the PET film, the PET film was immersed in a blocking solution (95.7 mL of 1-methyl-2-pyrrolidone, 1.6 g of succinic anhydride, and 4.3 mL of 1M aqueous sodium borate (pH 8.0)), in which it was shaken for 20 minutes; the PET film was then rinsed with ultrapure water at 95°C, was immersed and shaken in 95% ethanol for 1 to 2 minutes, and was dried.

### (2) Production of a plastic capillary

The PET film with immobilized probe DNA produced above (1) was rolled into a tube shape with the probe DNA immobilizing surface as the inner face thereof, and was inserted into a transparent PET plastic tube (3 mm (inner diameter ) x 3 cm (length) x 100 µm (thickness)).

### (3) Hybridization

In the hollow portion of the plastic capillary produced above (2) were soaked up 100 µL of hybridization solution containing target oligonucleotides (target oligonucleotide concentration: 1 pmol/ µL, yeast tRNA concentration: 1 µg/µL, solvent: 3 x SSC containing 0.2% SDS), the ends of the plastic capillary were sealed with Paraffin film (Parafilm, by Pechiney Plastic Packaging Inc.), and the array was warmed overnight at 40°C in a thermostatic bath. As the target oligonucleotide was used a 22mer poly(dT) bonded to biotin at the 5' end.

### (4) Post-hybridization washing

The plastic capillary was removed from the thermostatic bath and, after discarding the hybridization solution, the hollow portion of the plastic capillary was filled with wash buffer 1 (2 x SSC, 0.1% SDS) for 10 seconds in order to wash off the nonspecifically adsorbed target oligonucleotide. After discarding the wash buffer 1, the hollow portion of the plastic capillary was filled with wash buffer 2 (1 x SSC), which was discarded after 10 seconds. This procedure was repeated 3 times. An operation identical to that of the wash buffer 2 was carried out next with wash buffer 3 (0.2 x SSC).

### (5) Blocking and detection of the target oligonucleotides

The hollow portion of the plastic capillary was filled with blocking solution (1% casein, 3 x SSC), then blocking proceeded for 30 minutes at room temperature. After discarding the blocking solution, the plastic capillary was filled with streptavidin/alkaline phosphatase conjugate solution (stock solution diluted 2000-fold in a 0.2M NaCl, 0.1M Tris-HCl (pH 7.4), 0.05% Triton X, 1% casein solution), and the reaction was left to proceed at room temperature for 30 minutes. After discarding the streptavidin/alkaline phosphatase conjugate solution, the plastic capillary was filled with buffer solution A (0.2M NaCl, 0.1M Tris-HCl (pH7.4), 0.05% Triton-X) for 5 minutes, after which it was discarded. This procedure was repeated twice in order to remove the streptavidin/alkaline phosphatase conjugate not attached to the biotin bonded with the target oligonucleotide. Next, the plastic capillary was filled with buffer solution B (0.2M NaCl, 0.1M Tris-HCl (pH7.4) for 10 minutes, after which it was discarded. Finally, the plastic capillary was filled with substrate solution (10 mL of buffer solution B, 9 µL of BCIP (5-bromo-4-chloro-3-indolyl phosphate) and 18 µL of NBT (nitroblue tetrazolium)), then the coloring reaction was left to proceed for 3 hours at room temperature.

As a result, clear signals appeared in the regions where the probe DNA for positive control (complementary with the target oligonucleotide) was immobilized, whereas no signals appeared at all in the regions where the probe DNA for negative control (not complementary with the target oligonucleotide) was immobilized.

## Claims

1. A method for producing a probe array comprising a tubular member and probes arranged in the hollow portion of the tubular member, the method comprising a step of forming a flexible sheet member having a probe-immobilizing surface into a tubular member in such a way that the probe-immobilizing surface constitutes the inner face of the tubular member.

2. A method for producing a probe array comprising a tubular member and probes arranged in the hollow portion of the tubular member, the method comprising a step of attaching a flexible sheet member having a probe-immobilizing surface onto the inner face of the tubular member in such a way that the probe-immobilizing surface is exposed in the hollow portion of the tubular member.
